# EUROPEAN PATENT SPECIFICATION

(11) **EP 1 348 858 B1**
(45) Date of publication and mention of the grant of the patent: **05.07.2006**
(21) Application number: 03006714.4
(22) Date of filing: 24.03.2003
(51) Int. Cl.: F02D 41/40, F02B 1/12, F02D 35/02

(54) **Combustion control apparatus for an engine, an engine, combustion control method thereof, computer-readable storage medium, and computer program**
Verbrennungssteuerapparat für einen Motor, Motor, Verbrennungssteuerverfahren dafür, Speichermedium und Computerprogramm
Dispositif de commande de la combustion d'un moteur, moteur, méthode de commande associée, support d'enregistrement et programme informatique

(30) Priority: 27.03.2002 JP 2002088138; 28.03.2002 JP 2002092446
(43) Date of publication of application: 01.10.2003
(73) Proprietor: Mazda Motor Corporation, Aki-gun, Hiroshima 730-8670 (JP)
(72) Inventor: Kataoka, Motoshi, Mazda Motor Corporation, Aki-gun, Hiroshima 730-8670 (JP); Terazawa, Yasuyuki, Mazda Motor Corporation, Aki-gun, Hiroshima 730-8670 (JP); Hayashibara, Hiroshi, Mazda Motor Corporation, Aki-gun, Hiroshima 730-8670 (JP); Saito, Tomoaki, Mazda Motor Corporation, Aki-gun, Hiroshima 730-8670 (JP)
(74) Representative: Müller-Boré & Partner Patentanwälte

(56) References cited:
- EP-A- 0 732 485
- EP-A- 0 886 050
- EP-A- 1 063 427
- EP-A- 1 085 176
- EP-A- 1 134 400
- EP-A- 1 164 277
- WO-A-01/86128
- WO-A-99/42718

## Description

The present invention relates to a combustion control apparatus for an engine, to an engine, to a combustion control method, to a computer-readable storage medium, and to a computer program for performing combustion control method, when run on a suitable computer.

Generally, a direct-injection diesel engine injects fuel into a combustion chamber with high temperature and high pressure near the top-dead-center TDC of a compression stroke in a cylinder, so as to cause self ignition of fuel. At this time, the fuel injected into the combustion chamber progresses while being split into fine droplets (atomized) by collision with highly dense air, so as to form an approximately cone-shaped fuel spray. The fuel droplets vapourize from its surface and involve surrounding air mainly at the leading edge and its periphery of the fuel spray to form a mixture, which starts combustion at the timing when the density and temperature of the mixture attains the condition required for ignition (premixed combustion). Then, supposedly, the combustion shifts to the diffusion combustion involving surrounding fuel vapour and air, with its core at which the ignition or combustion has firstly occurred in the above mentioned manner.

In such combustion of the conventional diesel engine (simply referred to as diesel combustion hereinafter), the major part of fuel cause the diffusion combustion following the initial premixed combustion. At this time, however, in the fuel spray heterogeneous in density, nitrogen oxide (NOx) is produced by the abrupt heat production at the portion where excess air ratio λ is close to 1. Moreover, soot is produced by the shortage of oxygen at the portion where the fuel is unduly rich. In this regard, conventionally, the recirculation of part of the exhaust gas to intake air (Exhaust Gas Recirculation: simply referred to as EGR hereinafter) or the boosting of fuel injection pressure have been put into practice in order to reduce NOx and soot.

During such EGR, the recirculation of the inactive exhaust gas decreases the combustion temperature to suppress the generation of NOx, but on the other hand, reduces amount of oxygen in the intake air. Thus, a large amount of EGR results in the promotion of the soot production. In addition, the boosted fuel injection pressure promotes the atomization of fuel spray and increases fuel penetration to improve air-utilization ratio, which is capable of suppressing the generation of soot, but is likely to easily generate NOx. That is, because of the trade-off relationship between the reductions in NOx and soot, it is actually difficult to decrease both NOx and soot at once in the diesel combustion.

To this, recently, a new combustion concept has been proposed, which significantly and concurrently reduces NOx and soot by greatly advancing the fuel injection timing for attaining a combustion condition mainly dominated by the premixed combustion. The combustion concept is generally known as a premixed compressive ignition combustion. Japanese publication of patent application no. 2000-110669 discloses a diesel engine that recirculates a considerable amount of exhaust gas during the EGR and injects fuel at the timing within the compression stroke of a cylinder. The injected fuel sufficiently mixes with air to form the mixture, which self-ignites and combusts at the end of the compression stroke.

When such premixed combustion (the premixed compressive ignition combustion) occurs, the ratio of the exhaust gas returned to the intake air by the EGR (the EGR ratio) is increased by a certain amount from that in the diesel combustion described above. Especially, the exhaust gas of which heat capacity is larger than air is mixed with the intake air, and the density of fuel and air in the premixture is decreased to prolong a ignition delay time for sufficiently mixing fuel and intake air (air and exhaust gas). In addition, the ignition timing of the premixture generated in such a manner is delayed to near top-dead-center (TDC) of the compression stroke, so as to achieve a heat generation characteristic with high heat efficiency. Moreover, when the premixture ignites in the above mentioned manner, the inactive exhaust gas is substantially homogeneously diffused around the fuel and air. This absorbs the combustion heat, thereby greatly suppressing the NOx generation.

For recirculating such a large amount of the exhaust gas to combustion chambers of respective cylinders, the conventional diesel engine described above is equipped with an exhaust gas recirculation passage large in diameter communicating the intake passage with the exhaust passage. The exhaust gas drawn from the exhaust passage upstream of a compressor of a turbocharger is recirculated to an intake passage downstream of the compressor of the turbocharger. Furthermore, a regulator valve is provided for adjusting the amount of the exhaust gas flowing through the exhaust gas recirculation passage to achieve a proper ratio of the exhaust gas recirculation in the intake air.

However, in the case that the regulator valve adjusts the amount of the exhaust gas through the exhaust gas recirculation passage as described above, the recirculation amount of the exhaust gas does not immediately change upon the adjusting of opening degree of the exhaust gas recirculation amount regulator valve, but changes after a lag time. Thus, for example, in the case of an increase in the flow amount of intake air caused by a rise in engine rotational speed, the recirculation amount changes after a lag time, which causes a problem that the EGR ratio is temporarily lowered so as to deviate from the proper range . Moreover, the amount of the exhaust gas remaining in the combustion chamber (so called internal EGR) changes depending on an engine operational condition, which causes the EGR ratio to fluctuate.

Furthermore, even with the same EGR ratio, the change in temperature condition of the recirculating exhaust gas causes the ignition delay time to vary. That is, the ignition delay time is shortened with an increase in the recirculating exhaust gas temperature, in contrast, the ignition delay time is prolonged with a decrease in recirculating exhaust gas temperature. In addition, strictly, the change in temperatures of the combustion chamber and intake air cause the ignition delay time to vary.

Therefore, in the premixed compressive ignition combustion described above, only adjusting the opening degree of the regulator valve in the exhaust gas recirculation passage is insufficient to maintain the ignition timing of the premixture constantly near the top-dead-center, which causes a problem that the optimum heat generation characteristic is not always attained.

Here, Japanese publication of patent application publication no. 2000-008929 discloses a control process of the ignition timing of the premixture. According to the process, a part of fuel corresponding to a required engine torque is injected into the combustion chamber at a time within a period from the intake stroke to the compression stroke, to form relatively lean premixture. Then, the remaining part of fuel is injected near top-dead-center of the compression stroke for example, to immediately cause the diffusion combustion, which triggers the combustion of the premixture. However, in this art, the premixture is compulsorily forced to ignite by the diffusion combustion of the fuel injected later, which causes problems of: a considerable amount of soot generation during the combustion; and the degradation in fuel efficiency by a likely increase in the amount of the unburned mixture.

Reference may be made to a paper entitled "Development of Ignition Timing Control in HCCI Dl Diesel Engine" by Yanagihara et al, Proceedings of JSAE No. 51-01, No. 20015025, Pages 17 - 22, May 2001.
The paper discloses a technology, in which the engine with the relatively low compression ratio in its specification injects so small an amount of fuel as not to ignite by itself at an early timing (for example, BTDC 50 degrees CA.) of the compression stroke in the cylinder so as to generate premixture in the combustion chamber.
Then, while a low temperature oxidation reaction (a cool flame reaction) is continuing during the expansion stroke in which the temperature gradually lowers past the top-dead-center of the compression stroke of the cylinder, fuel is additionally injected to ignite and combust.

However, in the prior art, the additional fuel injection also triggers the ignition of itself. The difference of this prior art from the former prior art (Japanese publication of patent application publication no. 2000-008929) is only to set a fuel injection timing on the relatively retarded side in the expansion stroke (for example, ATDC 10 degree CA or after) of the cylinder for preventing the additional fuel injection from causing the diffusion combustion. Thus, supposedly, the greatly retarded ignition timing causes the cycle efficiency to decrease and the amount of unburned premixture to increase, which significantly degrade the fuel efficiency.

The object of present invention is to optimize the ignition timing of premixture and to improve fuel efficiency, even when the recirculation ratio of the exhaust gas is greatly changed or even when the temperature of the exhaust gas and other factor are fluctuated by the change in the engine operation condition, in a direct injection engine which injects fuel into the combustion chamber of the cylinder at a relatively early timing, recirculates a large amount of exhaust gas so as to delay the ignition of the mixture, and well mixes the fuel with intake air during the delay time, before the combustion of the mixture.

EP 1 063 427 A discloses an engine control system for controlling fuel injection of a direct-fuel injection engine in which auxiliary and main fuel injection are performed.

EP 0 732 485 A discloses a diesel engine having a NOx absorbent disposed in an exhaust gas passage in which a pre-mixture combustion is performed.

The object is solved according to the invention by a combustion control apparatus for a diesel engine according to claim 1, by a combustion control method according to claim 5, by computer-readable storage medium according to claim 6, and by computer program according to claim 7. Preferred embodiments of the present invention are subject of the dependent claims.
Thus, according to the present invention, the ignition timing of premixture is optimized and fuel efficiency is improved, even when the recirculation ratio of the exhaust gas is greatly changed or even when the temperature of the exhaust gas and other factor are fluctuated by the change in the engine operation condition, in a direct injection engine which injects fuel into the combustion chamber of the cylinder at a relatively early timing, recirculates a large amount of exhaust gas so as to delay the ignition of the mixture, and well mixes the fuel with intake air during the delay time, before the combustion of the mixture.

According to the present invention, just before or after the premixture formed of the fuel injected into the combustion chamber in the cylinder during the main-injection starts the cool flame reaction due to the temperature rise in the combustion chamber in the compression stroke of the cylinder, the auxiliary-injection is executed at a predetermined timing.
The amount of the auxiliary-injection is controlled to adjust the ignition timing.
That is, the inventors of the present invention have persistently endeavoured to solve the problem as described above in researching the compressive ignition of the premixed air-fuel mixture. As a result, the inventors newly discovered a fact that when the additional fuel injection is executed at the predetermined timing just before or after the occurrence of the cool flame reaction of premixture while the temperature in the combustion chamber gradually rise at a late stage of the compression stroke of the cylinder, the transition from the cool flame reaction to the hot flame reaction, that is the ignition, is delayed by the additional fuel injection. On the basis of the fact, the inventors have achieved the present invention.

As a result, the main-injection control means controls the injector to inject fuel at a relatively early timing at least in one of the intake stroke and the compression stroke for executing the main-injection. Moreover, the exhaust gas recirculation control means controls the exhaust gas recirculation regulator means so that the recirculation ratio becomes a predetermined value or more (the EGR value is equal to or larger than the first predetermined value). Thus, the fuel injected during the main-injection is widely diffused relatively over the combustion chamber and is sufficiently mixed with both the recirculated exhaust gas and air to form highly homogenized air-fuel mixture. The mixture self-ignites at the late stage of the compression stroke to attain the combustion in which the ratio of the premixed combustion is relatively large. The combustion is the low temperature combustion similar to that of the conventional example (Japanese publication of patent application publication no. 2000-110669), which produces significantly small amount of NOx and soot.

Additionally, the auxiliary-injection control means controls the injector to inject fuel for executing the auxiliary-injection just before or after the cool flame reaction occurs in the premixture at the raised temperature in the combustion chamber in the compression stroke of the cylinder. The injected fuel absorbs heat form surrounding premixture during fuel evaporation to lower the temperature, so that the transition from the cool flame reaction to hot flame reaction, that is the ignition of mixture, delays.

At this time, as the auxiliary-injection amount is increased, the temperature of the premixture is lowered to prolong the delay time. Thus, the ignition timing is controlled by the adjustment of the auxiliary-injection amount.

Preferably, the auxiliary-injection control means may control the auxiliary-injection amount so that the ignition of mixture, that is, the transition from the cool flame reaction to the hot flame reaction occurs within the predetermined period near the top-dead-center of the compression stroke of the cylinder.
This is because, as described above, as the auxiliary-injection amount is increased, the temperature of the premixture is lowered to prolong the delay time. Thus, the ignition timing is controlled by the adjustment of the auxiliary-injection amount. Accordingly, even when the recirculation ratio of the exhaust gas is changed or even when temperature and the other factor of the exhaust gas are fluctuated by the change in the engine operational condition, the ignition timing of the premixture can be maintained within a predetermined period near the top-dead-center so as to achieve heat generation characteristic with high cycle efficiency.

The auxiliary-injection amount may be adjusted according to at least the EGR value.

Specifically, an EGR ratio estimating means may be provided for estimating an actual EGR value of the engine, and the auxiliary-injection amount may be adjusted according to at least the value estimated by the EGR ratio estimating means. It is to be noted that the control of the auxiliary-injection amount may be performed based on the temperature of the exhaust gas and the temperature of the cylinder, in addition to the EGR value or its estimated value.

When the auxiliary-injection amount is adjusted in association with the EGR value as described above, the auxiliary-injection amount can be properly adjusted so as to compensate for the influence on the ignition timing by the change in the recirculation ratio of the exhaust gas to the combustion chamber, thereby attaining optimum heat generation characteristic with high cycle efficiency. Particularly, when the auxiliary-injection amount is adjusted according to the estimated value of the actual EGR value, the control accuracy is improved, thereby sufficiently providing the effect described above.

Preferably, the auxiliary-injection control means may increase the auxiliary-injection amount when the estimated value of the EGR value is equal to or larger than the second predetermined value smaller than the first predetermined value.
Thus, the increase in the auxiliary-injection amount delays the ignition timing of the premixture to near TDC even when, for example, the increase in the recirculation amount of the exhaust gas is delayed to unduly lowers the EGR ratio (the estimated value of the EGR value becomes the second predetermined value or less) while the engine is accelerating.

More preferably, an engine torque detecting means may be provided for detecting a value associated with the engine output torque, and the auxiliary-injection control means may preferably adjust the auxiliary-injection amount according to the value detected by the engine torque detecting means.

Specifically, the auxiliary-injection control means may compulsorily increase or decrease the auxiliary-injection amount in the steady state of the engine, and control the auxiliary-injection amount according to the change in the value detected by the engine torque detecting means as a result of the compulsory increase or decrease.

More specifically, when the value detected by the engine torque detecting means changes toward the higher torque side as a result of the increase in the auxiliary-injection amount, the auxiliary-injection amount may be further increased, and, when the detected value changes toward the lower torque side as a result of the increase in the auxiliary-injection amount, the auxiliary-injection amount may be decreased. On the other hand, when the value detected by the engine torque detecting means changes toward the higher torque side as a result of the decrease in the auxiliary-injection amount, the auxiliary-injection amount may be further decreased, and, when the detected value changes toward the lower torque side as a result of the decrease in the auxiliary-injection amount, the auxiliary-injection amount may be increased

That is, the increase in the auxiliary-injection amount causes the ignition timing of the premixture to retard.

Thus, if the engine torque is increased as a result of the increase in the auxiliary-injection amount, the ignition timing is on the advanced side of the optimum timing. To cope with this, the auxiliary-injection amount is further increased.
In contrast, if the engine torque is lowered as a result of the increase in the auxiliary-injection amount, the ignition timing of the premixture is on the retarded side of the optimum timing. To cope with this, the auxiliary-injection amount is decreased.
This causes the ignition of the premixture to occur at the timing which maximizes the engine torque, or achieves the optimum heat generation characteristic.

In the same manner, the auxiliary-injection amount may be increased or decreased according to the change in engine output torque when the auxiliary-injection amount is decreased.

That is, even when the ignition delay time is changed depending on the recirculation ratio and temperature of the exhaust gas and the temperature of the combustion chamber, the adjustment of the auxiliary-injection amount according to the change in engine output torque can cancel the influence of the ratio and temperature, thereby optimizing the ignition timing of the premixture.

In accordance with the present invention, there is further provided an engine equipped with the combustion control apparatus according to the present invention or the preferred embodiment thereof.

In accordance with the present invention, there is still further provided a computer-readable storage medium having stored thereon a computer program, which, when loaded onto a computer, carries out a combustion control method according to the present invention or the preferred embodiment thereof.

In accordance with the present invention, there is still further provided a computer program, which, when loaded onto a computer, carries out a combustion control method according to the present invention or the preferred embodiment thereof.

Other features, aspect and advantages of the present invention will become apparent from the following description of the invention which refer to the accompanying drawings. It should be understood that even though embodiments are separately described, single features thereof may be combined to additional embodiments.
FIG. 1 is a schematic diagram illustrating an overall structure of a combustion control apparatus for an engine in accordance with preferred embodiments of the present invention.
FIG. 2 is a diagram showing an example of a map or table or relationship used for switching the engine combustion modes.
FIG. 3 is an illustrative diagram schematically showing the fuel injection operation by the injector.
FIG. 4 is an graph chart illustrating the changes in the heat generation ratio with respect to the crank angle for different EGR ratios.
FIG. 5 (a), (b), and (c) are graph charts relationally showing the changes in excess air ratio, NOx concentration, and soot concentration with respect to the EGR ratio, respectively.
FIG. 6 is a graph chart showing the changes in NOx concentration and soot concentration with respect to the EGR ratio, during the diesel combustion.
FIG. 7 is a graph chart illustrating the changes in the heat generation ratio with respect to the crank angle for different auxiliary-injection amounts.
FIG. 8 is a graph chart illustrating the changes in the combustion chamber temperature with respect to the crank angle for different auxiliary-injection amounts.
FIG. 9 (a), (b), and (c) are graph charts respectively illustrating the changes in NOx concentration, soot concentration, and engine output for different auxiliary-injection amounts, respectively.
FIG. 10 is a flowchart illustrating the early stage of the fuel injection control process.
FIG. 11 is a flowchart illustrating the late stage of the fuel injection control process.
FIG. 12 (a), (b), and (c) are illustrative diagrams showing examples of a target torque map or table or relationship for the engine, an injection amount map or table or relationship, and an injection timing map or table or relationship, respectively.
FIG. 13 (a), and (b) are illustrative diagrams showing a table prescribing the basic injection amount for the auxiliary-injection with respect to the change in the EGR ratio, and a table prescribing the first corrective amount for the auxiliary-injection with respect to the change in the EGR deviation, respectively.
FIG. 14 is a flowchart showing the EGR control process.
FIG. 15 (a) and (b) are illustrative diagrams showing examples of an EGR map or table or relationship, and the change in the opening of the EGR valve on the EGR map or table or relationship, respectively.

Preferred embodiments of the present invention with reference to the accompanying drawings.

### (Overall configuration)

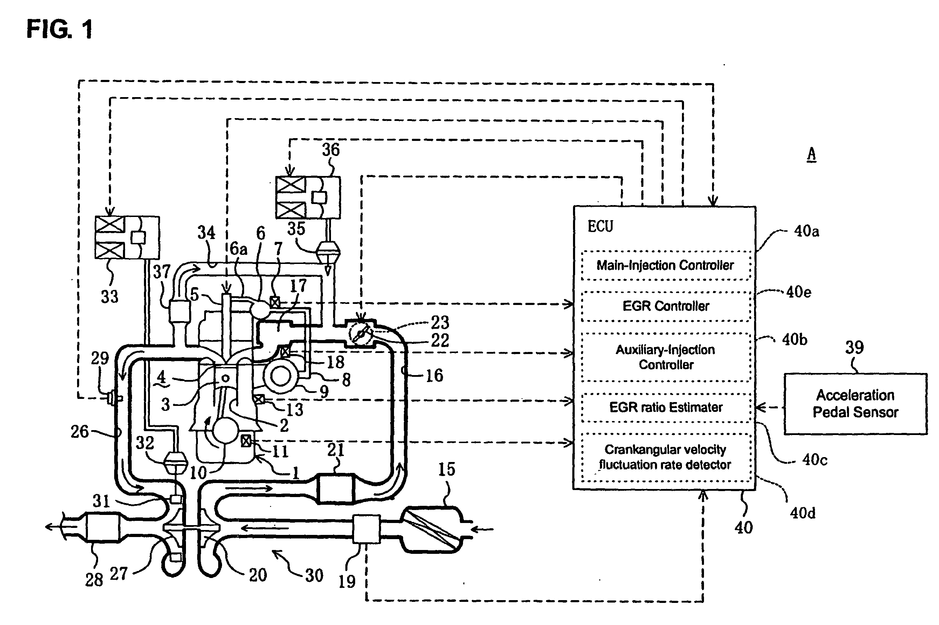

FIG. 1 illustrates a configuration of a combustion control apparatus A for an engine in accordance with the preferred embodiment of the present invention, by way of example. Identified by 1 is a diesel engine to be mounted on a vehicle. The engine 1 comprises a plurality of cylinders 2,2,... (one of which is illustrated). Pistons 3 are fitted within each cylinder 2 so as to reciprocate preferably substantially in vertical direction, respectively. The piston 3 defines a combustion chamber 4 within each cylinder 2. An injector 5 (fuel injection valve) is arranged at a roof of the combustion chamber 4. The injector 5 injects fuel at high pressure directly into the combustion chamber 4 from one or more injection bores at the tip of the injector 5. On the other hand, the proximal end of the injector 5 for each cylinder 2 is connected to a common fuel delivery pipe 6 (a common rail) via fuel delivery pipes 6a, 6a,...(one of which is illustrated), respectively. The common rail 6, connected to a high-pressure supply pump 9 via a fuel supply pipe 8, accumulates fuel supplied from the high-pressure supply pump 9 at high pressure in order to supply fuel to the injectors 5,5,... at required or controllable timings. The common rail 6 is provided with a fuel pressure sensor 7 for detecting the internal pressure thereof (common rail pressure).

The high-pressure supply pump 9 is connected to a fuel supply system not shown and is operably connected to a crank shaft 10 through a toothed belt or other parts for pressure-feeding the high pressure fuel to the common rail 6. The fuel is partially returned to the fuel supply system via a solenoid valve to adjust the amount of the fuel to be supplied to the common rail 6. The opening of the solenoid valve is controlled by an ECU 40 (described later) based on the detected value of the fuel-pressure sensor 7, so that the fuel pressure is set to a predetermined or predeterminable value corresponding to the operational condition of the engine 1.

In addition, at the top portion of the engine 1, valve-diving mechanisms, not shown, are disposed for opening and closing intake valves and exhaust valves, respectively. On the other hand, at the bottom portion of the engine 1, a crank angle sensor 11 is disposed for detecting the rotational angle of the crank shaft 10, and an engine coolant temperature sensor 13 is disposed for detecting a temperature of the coolant. The crank angle sensor 11, not illustrated in detail, comprises a detectable plate provided at the end of the crank shaft 10 and a preferably electromagnetic pick up facing to the periphery of the plate. The pickup generates pulsed signals in response to the approach of teeth formed at regular intervals on the outer peripheral surface of the detectable plate.

One side surface of the engine (on the right-side surface in the drawing) is connected an intake passage 16 for supplying intake air filtered by an air cleaner 15 (fresh air) to the combustion chamber 4. At the downstream end of the intake passage 16, a surge tank 17 is disposed, from which respective passages branch out to communicate with the combustion chamber 4 in each cylinder 2 via intake ports. The surge tank 17 is provided with an intake air pressure sensor 18 for detecting the pressure of the intake air.

In the intake passage 16, from upstream side to the downstream side, the following components are preferably provided in order: a hot-film type air flow sensor 19 for detecting the amount or flow of intake air introduced from the outside into the engine 1; a compressor 20 driven by a turbine 27 described later for compressing intake air; an intercooler 21 for cooling intake air compressed by the compressor 20; and an intake-air throttle valve 22 preferably comprising a butterfly valve. A valve shaft of the throttle valve 22 is rotated by a stepping motor 23 so that the valve can set to a predetermined position between a fully closed state and a fully open state. In the fully closed state of the valve 22, preferably a clearance is left between the throttle valve 22 and inner wall of the intake passage 16, through which air passes,

Moreover, on the opposite side of the engine 1 (on the left-side surface in the drawing) is connected to an exhaust gas passage 26 for exhausting combust gas (exhaust gas) from the combustion chamber 4 in each cylinder 2. The upstream end of the exhaust gas passage 26 branches out corresponding to the respective cylinders 2, to form exhaust manifolds communicating with the combustion chamber 4 via exhaust ports. In the exhaust gas passage 26 downstream of the exhaust manifold, from the upstream side to the downstream side, the following components are preferably provided in order: a linear O2 sensor 29 for detecting O2 concentration in the exhaust gas; a turbine 27 rotated by an exhaust gas flow; and/or a catalyst converter 28 capable of purifying harmful components (such as HC, CO, NOx, and soot) in exhaust gas.

A turbocharger 30 comprising the turbine 27 and the compressor 20 in the intake passage 16 is of a variable geometry turbocharger (referred to as VGT hereinafter), which adjusts a cross-sectional area in the exhaust passage communicating with the turbine 27 using adjustable flaps 31,31,.... Each of the flaps 31,31,...are operably connected to a diaphragm 32 via link mechanism not shown. The negative pressure acting on the diaphragm 32 is adjusted by a solenoid valve 33 for controlling the negative pressure, so that the rotational positions of the flaps 31,31,... are adjusted.

An upstream end of a exhaust gas recirculation passage 34 (referred to as EGR passage hereinafter), for partially recirculating the exhaust gas to the intake air, is connected to the exhaust passage 26 so as to open to a portion of the passage 26 on the upstream side of the turbine 27 with respect to the exhaust gas flow. The downstream end of the EGR passage 34 is connected the intake passage 16 between the throttle valve 22 and the surge tank 17, which recirculates drawn part of the exhaust gas from the exhaust passage 26 to the intake air passage 16. At the midstream portion of the EGR passage 34, an EGR cooler 37 for cooling the exhaust gas flowing through the EGR passage 34 and an exhaust gas recirculation amount regulator valve (referred to as EGR valve hereinafter) 35 adjustable or controllable in its opening are arranged. The EGR valve 35 is of a vacuum sensing type. Similar to the flaps 31,31,... of the VGT 30 described above, a solenoid valve 36 adjusts the negative pressure acting on a diaphragm, which thus linearly controls the cross-sectional area of the EGR passage 34 to achieve a proper flowing amount of the exhaust gas to be recirculated to the intake passge 16.
It should be appreciated that the apparatus may not comprise the EGR cooler 37.

The injector 5, the high-pressure pump 9, the throttle valve 22, the VGT 30, the EGR valve 35, and other parts operate or are controlled according to control signals transmitted from control unit 40 (Electronic Control Unit: referred to as ECU hereinafter) On the other hand, the ECU 40 receives output signals from the fuel pressure sensor 7, the crank angle sensor 11, the coolant temperature sensor 13, the intake air pressure sensor 18, the air flow sensor 19, the linear O2 sensor 29, and/or other parts. The ECU 40 further receives an output signal from an acceleration pedal sensor 39 for detecting an accelerator pedal travel or position or operation, not shown, operated by a driver (accelerator pedal position).

### (Overview of the Combustion Control for the Engine)

The ECU 40 basically controls the engine 1 in such a way as to: determine a basic target fuel injection amount mainly according to the accelerator pedal position; adjust the fuel injection amount and injection timing by controlling the operation of the injector 5; and/or adjust the fuel pressure, or the injection pressure of fuel by controlling the operation of the high-pressure pump 9. Moreover, the ECU 40 controls the throttle valve 22 and the EGR valve 35 to adjust the ratio of the returning exhaust gas into the combustion chamber 4, and the flaps 31,31,... of the VGT 30 (the control of the VGT) to improve charging efficiency of intake air.

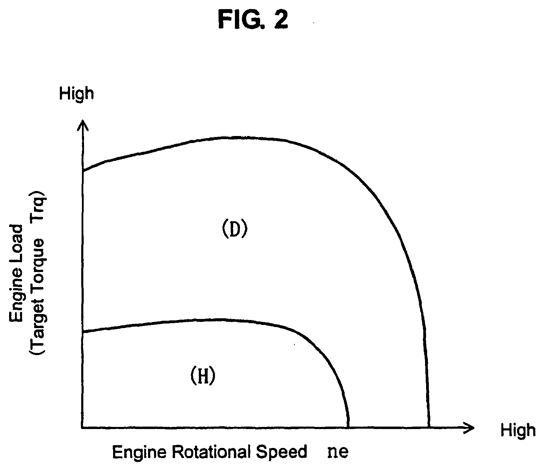

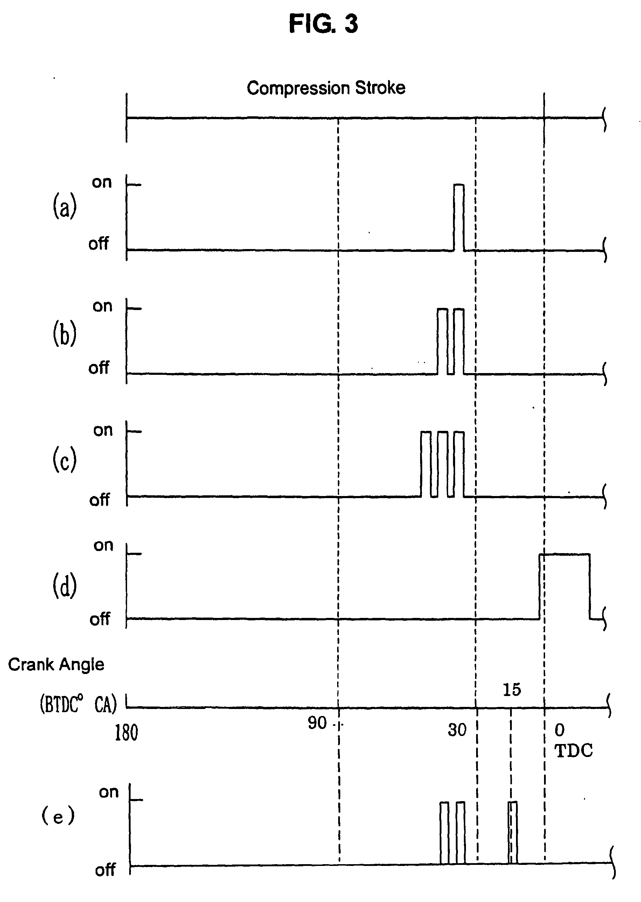

Particularly, as shown in a control map or table or relationship (a combustion mode map) of FIG. 2 for example, a region of a premixed combustion (H)) is defined on the relatively low engine load side in the whole operational region in warmed-up state of engine 1 (predetermined operational condition). In the region, as schematically shown in FIGs. 3 (a) to (c), the injector 5 injects fuel within a period between the middle-stage and late-stage of the compression stroke to cause a self-ignition of the mixture after the mixture previously becomes homogeneous as much as possible. Such combustion configuration commonly referred to as the premixed compressive ignition combustion. Under the combustion configuration, most of the mixture simultaneous ignites after the elapse of an ignition delay time and combusts substantially at once, by properly adjusting the fuel injection timing to broadly diffuse the fuel adequately for attaining mixture well-mixed with air, when the smaller amount of the fuel is to be injected per one cycle of the cylinder 2. That is, the premixed compressive ignition combustion is defined as the combustion where the ratio of premixed combustion is larger than that of diffusion combustion.

In this case, the fuel injection by the injector 5 may be executed in a one-shot manner as shown in FIG. 3 (a), otherwise, in a divided manner with a plurality of shots as shown in FIGs. 3 (b) and (c). This is because the injection in the divided manner can avoid unduly enhanced fuel penetration of fuel spray when the fuel is injected within a period between the middle stage and the late stage of the compression stroke of the cylinder 2 into the combustion chamber 4, where pressure and density of gas are lower than those near the top-dead-center of the compression stroke. Thus, the number of the fuel injections (the number of division(s)) are preferably increased for the larger amount of fuel to be injected.

During the premixed compressive ignition combustion, the EGR valve 35 is opened by a relatively large amount to return a considerable amount of exhaust gas into the intake passage 16. Accordingly, the inactive exhaust gas with large heat capacity is mixed with fresh air supplied from outside, and the resulting gas is mixed with fuel droplets and fuel vapor, so that the heat capacity of mixture is increased and the density of fuel and oxygen within the mixture relatively becomes relatively low. This enables the ignition and combustion to occur after air, exhaust gas, and fuel are sufficiently mixed during prolonged ignition delay time.

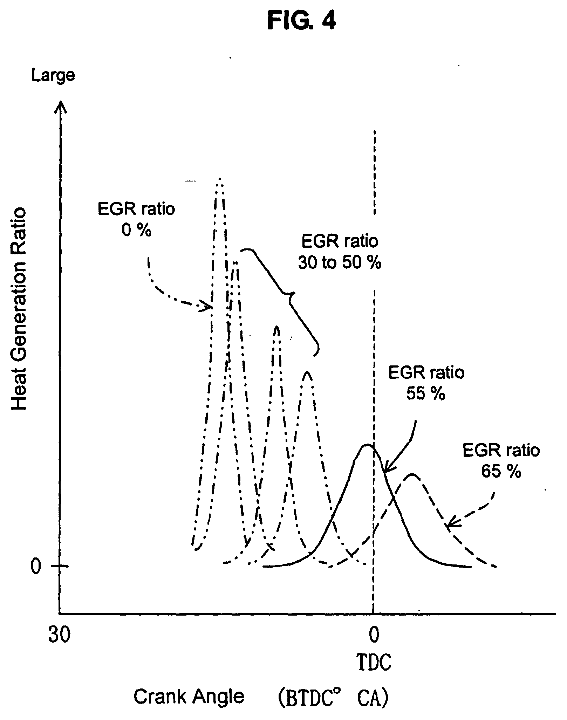

Especially, the graph chart in FIG. 4 is an empirical result showing the change in the heat generation characteristic with respect to the EGR ratio (the ratio of the exhaust gas recirculation amount to the total amount summing up the fresh air amount and the exhaust gas recirculation amount), when the fuel is injected at a predetermined crank angle (for example, BTDC 30 degrees crank angle CA) prior to or before top-dead-center of the compression stroke (BTDC) to cause the premixed compressive ignition combustion, while the engine 1 is in the low engine load. It has been recognised that, as indicated by phantom line in the drawing, a small EGR ratio causes the mixture to self-ignite on the significantly advanced side of the TDC, which provides unduly early heat generation with low cycle-efficiency. On the other hand, the timing of self-ignition gradually shifts towards the advanced side as the EGR ratio increase, and as indicated by solid line in the drawing, the EGR ratio of 55% maximizes the heat generation at approximately TDC, which provides the heat generation with high cycle efficiency . Moreover, the graph chart shown in FIG. 4 reveals that the peak of heat generation is significantly raised with the low EGR ratio so as to cause the intense combustion at high combustion velocity. At this time, NOx is actively produced and significantly loud combustion noise is emitted during the combustion. However, as the EGR ratio increases, the gradient of the rise in heat efficiency gradually becomes gentle and the maximum heat efficiency becomes lower. It has been recognised that this can be attributed in that a considerable amount of exhaust gas included in the mixture as described above lowers the density of fuel and oxygen by the amount corresponding to the exhaust gas amount, and the exhaust gas absorbs the combustion heat. Then, the low temperature combustion condition with such gentle heat generation significantly suppresses NOx production.

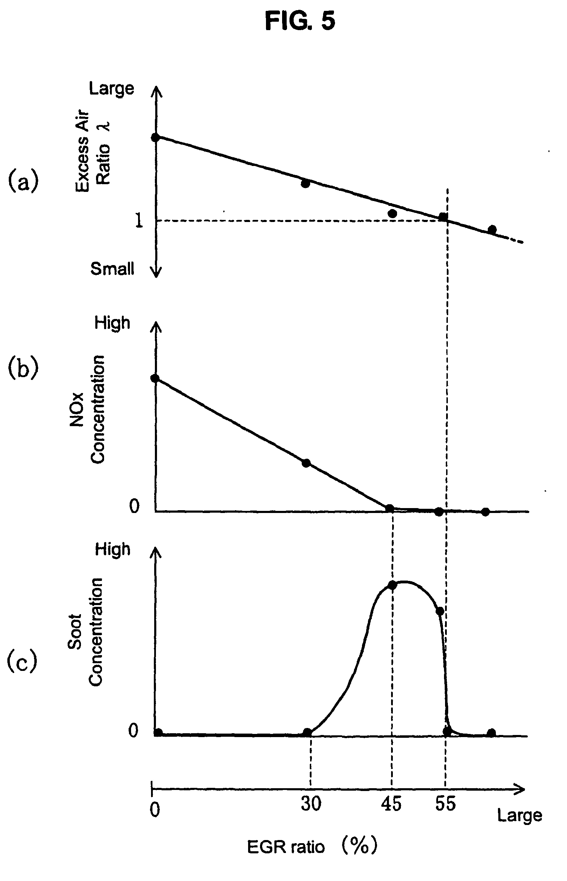

Particularly, the graph chart in FIG. 5 shows the change in an excess air ratio λ in the combustion chamber and concentration of NOx and soot in the exhaust gas with respect to the EGR ratio in the empirical result. FIG. 5 (a) reveals that, under this empirical condition, the large excess air ratio λ of approximately 2.7 is attained when the EGR ratio is 0%, and the increase in the EGR ratio gradually decreases the excess air ratio λ, until eventually providing λ=1 when the EGR ratio is approximately 55% to 60%. That is, the increase in recirculation ratio of exhaust gas brings the mean excess air ratio λ of the mixture near 1, however, the density of fuel and oxygen is not so high even with the ratio of oxygen to fuel being approximately λ=1, because a large amount of exhaust gas exists around the fuel and oxygen. Accordingly, as shown in FIG. 5 (b), the increase in EGR ratio decreases NOx concentration in the exhaust gas at a constant rate, until NOx is hardly generated with the EGR ratio greater than 45%.

As for soot production, FIG. 5 (c) reveals that soot is hardly generated with the EGR ratio between 0 and approximately 30%. Then, soot concentration abruptly increases when the EGR ratio exceeds approximately 30%, but decreases again when the EGR ratio exceeds approximately 50%, until reaching approximately zero when the EGR ratio exceeds approximately 55%. This is because, when the EGR ratio is low, the combustion configuration in which the ratio of the diffusion combustion is larger than that of the premixed combustion occurs similar to the conventional diesel combustion, and soot is hardly generated during intense combustion because of air in the excessive amount for the fuel amount in the intake air. In contrast, when the increase in the EGR ratio decreases the amount of oxygen in intake air, the diffusion combustion is degraded, so that soot generation abruptly increases. On the other hand, when the EGR ratio exceeds approximately 55%, the combustion occurs after fresh air, exhaust gas, and fuel sufficiently are well mixed as described above, which hardly generates soot.

In short, in this embodiment, when the engine 1 is in the region (H) of the premixed combustion defined on the low engine load side, the fuel injection is executed at a relatively early timing. In addition, the opening of the EGR valve is controlled so that the EGR ratio exceeds a predetermined value (a first predetermined value: approximately 55% in the empirical embodiment described above, and preferably within a range between approximately 50% to 60% in general). Thus, the low temperature combustion mainly dominated by the premixed combustion is attained, with little NOx production nor soot production.

On the other hand, as shown in the control map or table or relationship in FIG. 2, in the region (D) on the high rotational speed side and high engine load side except for the region of the premixed combustion (H), the conventional diesel combustion, in which the ratio of the diffusion combustion is larger than that of the premixed combustion, is performed. Particularly, as shown in FIG. 3 (d), the injector 5 is controlled to inject fuel mainly at a timing near top-dead-center TDC of the cylinder 2 so that most fuel causes the diffusion combustion following initial premixed combustion (the operational region (D) is referred to as the diffusion combustion region hereinafter. In this operational region, the injection may be executed at other timings than the timing near top-dead-center TDC of the compression of the cylinder 2.)

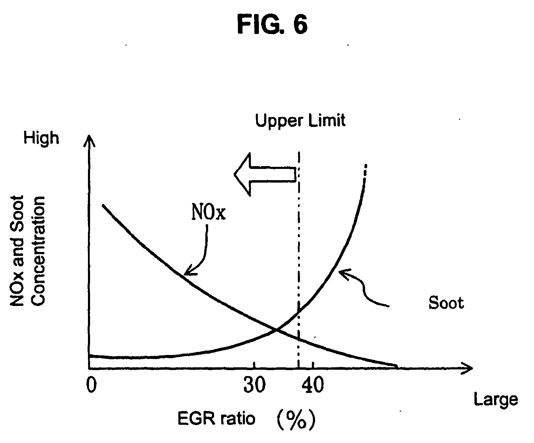

In the diffusion combustion, the opening of the EGR valve 35 is controlled to a smaller degree than that in the premixed combustion region (H) so that the EGR ratio becomes the predetermined value or less. This is because, in the conventional diesel combustion mainly dominated by the diffusion combustion, the EGR ratio should be set so as to suppress as much NOx production as possible without the increase in soot production. Particularly, as shown in the graph chart in FIG. 6 by way of example, the upper limit to the EGR ratio is preferably set within approximately 30% to 40%, in the diffusion combustion region (D). Moreover, because the supply amount of fresh air into the cylinder 2 should be ensured for accommodating the increase in engine load, the EGR ratio is lowered on the higher engine load side, furthermore, because the charging pressure of intake air is increased by the turbocharger 30 on the higher rotational speed side and the higher engine load side, the exhaust gas recirculation is not to be substantially performed.

### (Auxiliary-injection control)

Nevertheless, when the engine 1 performs the premixed compressive ignition combustion with the high EGR ratio as described above, the limitless increase in recirculation amount of the exhaust gas into the combustion chamber 4 is unfavorable. For example, when the EGR ratio unduly increases, the ignition timing of the premixture is unduly delayed to degrade the cycle efficiency, which increases the amount of unburned fuel and may cause misfire. To this, the ECU 40 generally regulates the opening of the EGR valve 35 in response to the changes in the engine rotational speed and the intake air amount calculated based on the signal from the air-flow sensor 19.

However, in the accelerating condition of the engine 1, the change in the recirculation amount of the exhaust gas lags behind the increase in intake air flow amount, which may cause a problem that the EGR ratio temporarily decreases too far below the first predetermined value. Especially, in the engine 1 comprising the turbocharger 30 as in this embodiment, the recirculation amount of the exhaust gas greatly changes depending on the charge in charging pressure, so that the EGR ratio is likely to greatly change. This problematically fluctuates the ignition timing.

In addition, even with the same EGR ratio, the change in temperature condition of the recirculating exhaust gas causes the ignition delay time to vary. Especially, the ignition delay time shortens for the higher temperature of recirculated exhaust gas, in contrast, the ignition delay time prolongs for the lower temperature of recirculated exhaust gas. Furthermore, strictly, the ignition delay time varies with the changes in the temperature in the combustion chamber 4 and the temperature of the intake air. Such change in ignition timing due to the change in temperature as above is also a problem to be solved.

That is, when the engine 1 performs the premixed compressive ignition combustion, the mere control of the opening of the EGR valve cannot maintain the ignition timing of premixture within the proper range near TDC, which cannot always provide the optimum heat generation characteristic.

In this regard, the inventors of the present invention persistently researched the compressive ignition of the premixture.
As a result, the inventors newly recognised a fact that when the additional fuel injection (referred to as auxiliary-injection hereinafter) is executed at the predetermined timing just before or after the occurrence of the cool flame reaction of the premixture while the temperature in the combustion chamber 4 gradually rises at a late stage of the compression stroke of the cylinder 2 of the engine 1 (as shown in FIG. 3 (e)), the transition from the cool flame reaction to the hot flame reaction, that is, ignition is delayed by the auxiliary-injection, and the delay time changes with respect to the fuel amount of the additional fuel injection.
Preferably, the injection start of the auxiliary-injection is set or determined so that the fuel injected by the auxiliary-injection diffuses over the combustion chamber 4 by the timing of the occurrence of the cool flame reaction. This enhances the effect of the ignition delay and the variation in the delay time.

The cool flame reaction is generally caused near the timing 15 degrees CA before top-dead-center in the compression stroke.

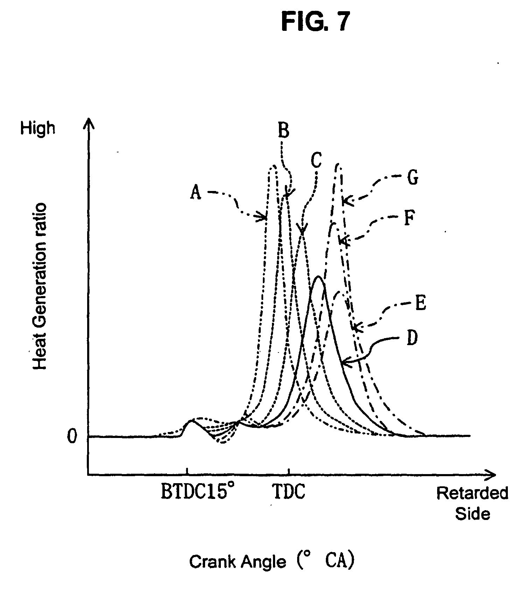

Especially, the graph chart shown in FIG. 7 illustrates the heat generation ratio, when the injection (referred to as main-injection hereinafter) is executed at a relatively early timing of the compression stroke of the cylinder 2 (for example, approximately BTDC 30 to 45 degrees CA) and the auxiliary-injection is started at a predetermined timing at a late stage of the compression stroke (for example, near BTDC 15 degrees CA), with the EGR ratio of approximately 50% smaller than the first predetermined value in the low load region of the engine 1. The graph chart reveals that the ignition timing of the premixture shifts toward the retarded crank angle side for the larger fuel amount of the auxiliary-injection.

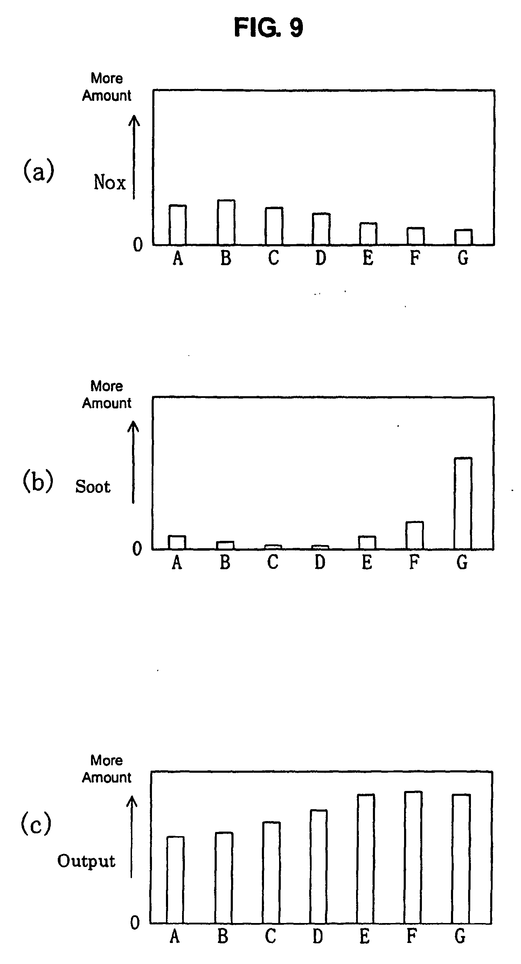

In detail, when the auxiliary-injection is not executed (the fuel amount of the auxiliary-injection is set zero), as shown as the plot A in a phantom line in the drawing, a small amount of heat generation by cool flame reaction is seen from approximately BTDC 20 degrees CA, and the heat generation ratio abruptly rises at approximately BTDC 8 degrees CA, until reaching the relatively high peak prior to TDC. In this case, the EGR ratio smaller than the first predetermined value causes the premixture to ignite at an unduly early timing, accordingly, as shown in FIGs. 9 (a) and (b), a large amount of NOx and soot is produced, and as shown in FIG. 9 (c), the engine output is relatively lowered (this causes the degradation in fuel efficiency).

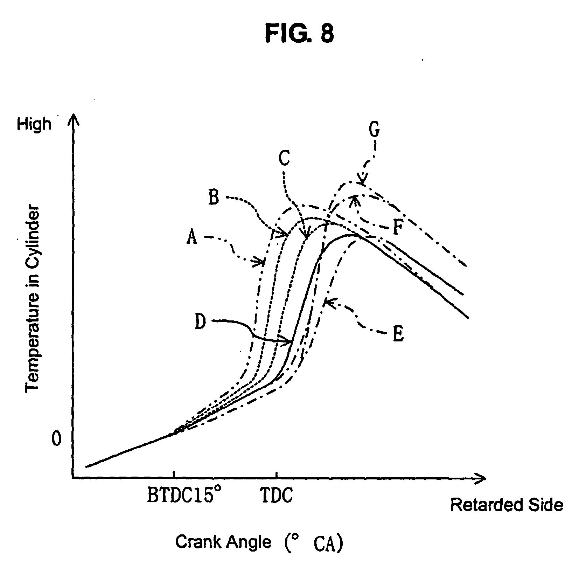

On the other hand, when the auxiliary-injection is executed, as shown as broken lines B and C, and a solid line D in FIG. 7 and 8 respectively, the heat generation ratio temporarily lowers at approximately BTDC 15 to 10 degrees CA to gently raise the temperature in the cylinder 2, and the ignition timing at which the heat generation abruptly rises shifts toward the retarded crank angle side. At this time, for the same total amount of fuel injection summing up the main-injection amount and the auxiliary-injection amount, as the auxiliary-injection amount increases in the order of the plots B, C, and D (the ratio of the auxiliary-injection amount to the total injection amount is approximately 14%, approximately 23%, and approximately 33%, respectively), the ignition timing gradually shifts toward the retarded side and the gradient of the rise in heat generation ratio becomes gentle. Subsequently, when the auxiliary-injection amount becomes approximately equal to the main-injection amount as shown as plots in a solid line D and a dash-dotted line E (the ratio of the auxiliary-injection amount is 58% for the plot E), the ignition occurs substantially at TDC, with the optimum heat generation characteristic of high cycle efficiency.

Such delay of the ignition timing by the auxiliary-injection can be attributed in that heat of the surrounding premixture is absorbed by the vaporization of the fuel by the auxiliary-injection and the temperature is thus decreased. Especially, a pre-flame reaction before the self-ignition of the premixture can be roughly categorized into:
the oxidation reaction at relatively low temperature during which fuel and oxygen reacts to produce an intermediate product (this reaction is defined as the cool flame reaction); and
the oxidation reaction at relatively high temperature during which the intermediate product is generated and fuel and oxygen reacts to produce water and carbon dioxide (this reaction is defined as the hot flame reaction). Once the hot flame reaction starts, the reaction is supposed to explosively progress.

Such progress of the pre-flame reaction is greatly influenced by density of fuel and oxygen and temperature of the surrounding gas. When the temperature and density are relatively low, the hot flame reaction is reached after relatively long duration of the cool flame reaction. Occasionally, the hot flame reaction may not be reached (the engine misfires). In contrast, when the temperature and density are relatively high, the hot flame reaction is immediately reached after short duration of the cool flame reaction.

In view of the above, if the auxiliary-injection is executed before the occurrence of the cool flame reaction, the fuel by the auxiliary-injection unites or is mixed with the premixture formed by the main-injection so as to form partially unduly rich mixture. Under this high fuel density in the unduly rich mixture, the hot flame reaction is supposed to occur at an early timing. On the other hand, if the auxiliary-injection is executed after the occurrence of the cool flame reaction, a part of fuel is already consumed by the cool flame reaction before the vaporization of the fuel by the auxiliary-injection and mixture with locally high density is thus unlikely to be formed. In this case, supposedly, the temperature of the premixture is decreased by latent heat of vaporization of fuel by the auxiliary-injection to delay the occurrence of the hot flame reaction.

However, once the hot flame reaction occurs in the premixture because of the unduly late timing of the auxiliary-injection, the combustion cannot be controlled to terminate, even though the temperature of the mixture is lowered by the auxiliary-injection as described above. Thus, the auxiliary-injection at unduly late timing has no effect, and the auxiliary-injection is thus preferably executed within a timing between approximately 20 and approximately 10 degrees CA for example (more preferably, the injection start of the auxiliary-injection is set within a timing approximately between 20 and 15 degrees CA). When the auxiliary-injection is unduly late, most of fuel by the auxiliary-injection combusts during the diffusion combustion. This is ineffective for delaying the ignition, and causes a problem of increased soot concentration due to the combustion of fuel by auxiliary-injection.

In short, when the main-injection is executed at a relatively early timing in the compression stroke of the cylinder 2 and the auxiliary-injection is executed at a predetermined timing at a late stage of the compression stroke just before or after the cool flame reaction is caused by the temperature rise in the combustion chamber 4 in the premixture formed by the fuel of the main-injection, the temperature of the premixture can be lowered by the latent heat of vaporization of fuel by the auxiliary-injection to delay the ignition timing. Accordingly, when the EGR ratio is less than the first predetermined value for example, the ignition timing can be controlled by the adjustment of the auxiliary-injection amount.

However, when the fuel amount of the auxiliary-injection executed at a late stage of the compression stroke of the cylinder 2 is unduly increased, the ratio of the diffusion combustion to the overall combustion is abruptly increased, which results in high cylinder temperature due to the abrupt heat generation near TDC, as shown as the plots F and G in dash-dotted lines in FIGs. 7 and 8 (the ratios of the auxiliary-injection amount are 78% and 100%, respectively). This causes intense combustion at high combustion velocity, so as to abruptly increase the soot production (refer to FIG. 9 (b)).

Therefore, the combustion control apparatus A of the preferred embodiment controls the injectors 5 of the respective cylinders 2 to execute the auxiliary-injection in addition to the main-injection, and properly adjusts the amount of the auxiliary-injection so as to optimize the ignition timing, when the engine 1 is in the premixed combustion region (H). Especially, in view of the empirical results above, the ratio of auxiliary-injection amount to the total amount of fuel injection is preferably set within approximately 20 to approximately 70 %, more preferably, within approximately 30 to approximately 60 %.

### (Control Process of Fuel Injection)

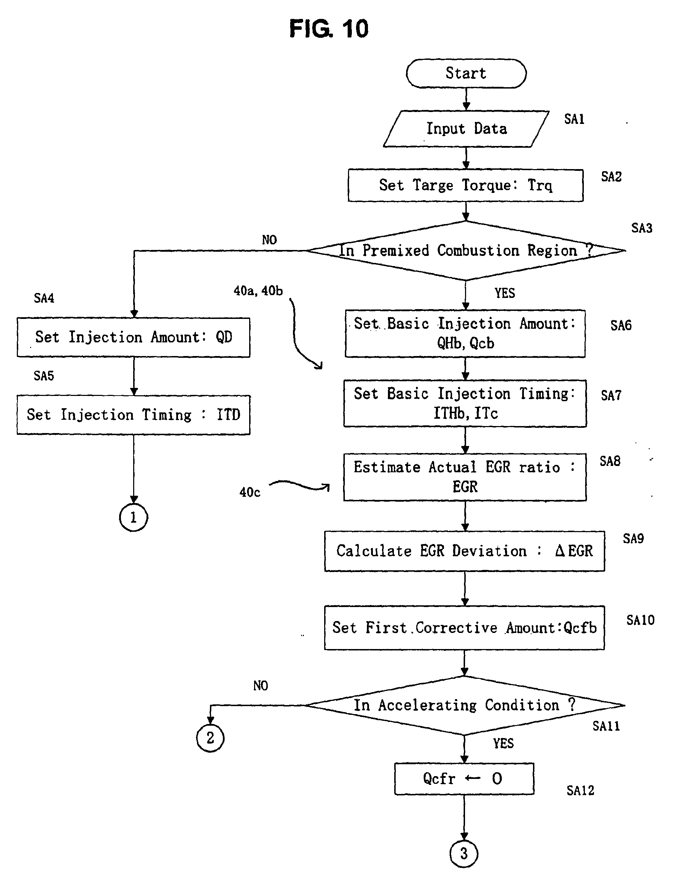

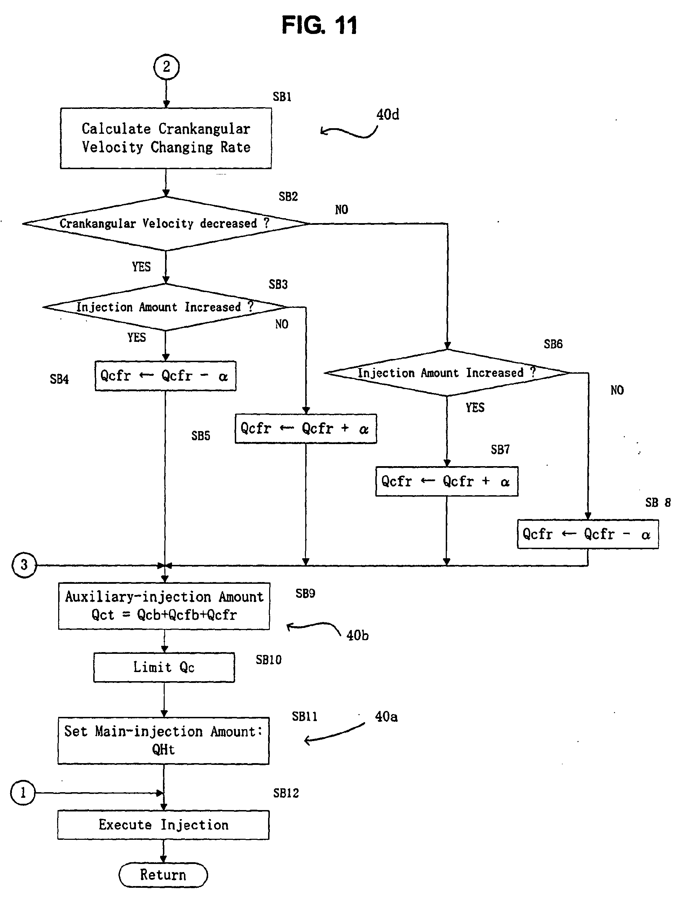

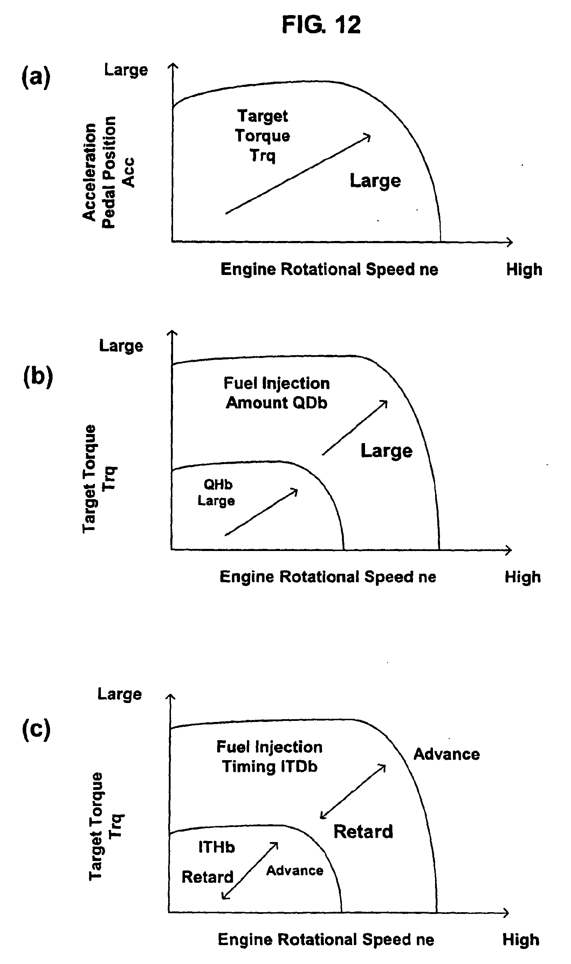

A preferred control process of the injector 5 by the ECU 40 will now be described in detail with reference to the flowchart illustrated in FIGs. 10 and 11. At step SA1 just after the process starts shown in FIG. 10, at least an output signal of the fuel pressure sensor 7, an output signal of the crank angle sensor 11, an output signal of the intake air pressure sensor 18, an output signal of the air flow sensor 19, an output of the linear O2 sensor 29, an output signal of the acceleration sensor 39, and/or other output signals are inputted, and a variety of data at least temporarily stored in a memory of the ECU 40 are read (data input). At following step SA2, a target torque Trq of the engine 1 is determined with reference to a target torque map or table or relationship based the acceleration pedal position Acc and the engine rotational speed ne calculated from the crank angle signal. The target torque map or table or relationship holds the optimum value preferably empirically predetermined or predeterminable corresponding to the acceleration pedal position Acc and the engine rotational speed ne, and is stored in the memory of the ECU 40. As shown in FIG. 12 (a) by way of example, the target torque Trq is set so as to be increased for the larger acceleration pedal position Acc and for the larger engine rotational speed ne.

At following step SA3, a combustion mode of the engine 1 is judged with reference to a combustion mode map or table or relationship (refer e.g. to FIG. 2). Especially, a judgement is made as to whether the engine is in the premixed combustion region (H) or not according to the target torque Trq and the engine rotational speed ne. If YES is judged, that is, the engine 1 is judged to be in the premixed combustion region (H), the sequence proceeds to step SA6 described later. If NO is judged, that is, the engine 1 is judged to be in the diffusion combustion region (D), the sequence proceeds to step SA4, where a basic injection amount QDb are read from the diffusion combustion region (D) in the injection amount map or table or relationship shown in FIG. 12 (b), based on the target torque Trq and the engine rotational speed ne. In the same manner, a basic injection timing ITDb (a crank angle position when a needle of the injector 5 opens) is read from an injection timing map or table or relationship shown in FIG. 12 (c). Then, the values are preferably subjected to predetermined corrective calculations respectively to provide the fuel injection amount QD and the fuel injection timing ITD. Next, the sequence proceeds to step SB1 in the flowchart in FIG. 11, where the injector 5 of each cylinder 2 injects fuel as will be described later, and the sequence returns.

Particularly, the injection amount map or table or relationship and the injection timing map or table or relationship hold the optimum values preferably empirically predetermined corresponding to the target torque Trq and the engine rotational speed ne, and are electronically stored in the memory of the ECU 40. In the injection amount map or table or relationship, the value of the basic injection amount QDb for the diffusion combustion region (H) is set so as to be increased for the larger acceleration pedal position Acc and for the larger engine rotational speed ne. Additionally, in the injection timing map or table or relationship, the value of the basic injection timing ITDb for the diffusion region (D) is set in association with the fuel injection amount and the fuel pressure (the common rail pressure) so that the termination timing of the fuel injection (corresponding to the crank angle when the needle of the injector 5 closes) is at a predetermined timing after the top-dead-center of the compression stroke and the fuel spray favorably causes the diffusion combustion.

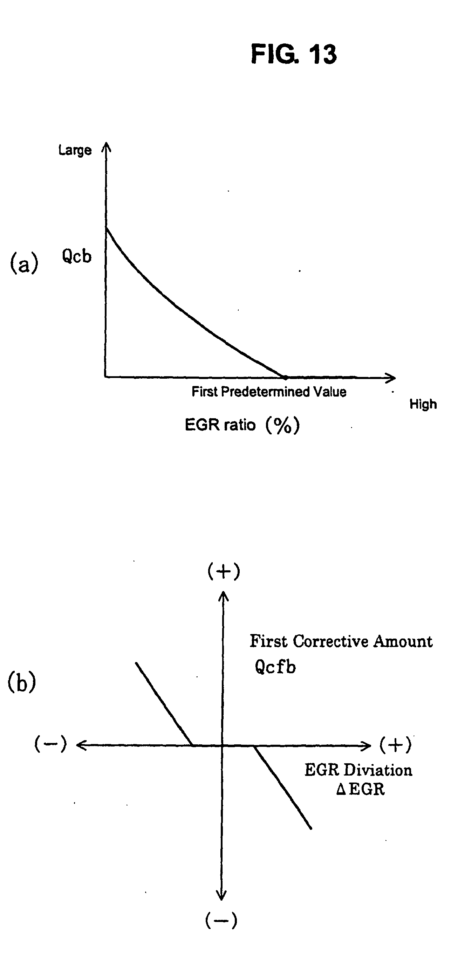

On the other hand, if step SA3 judges NO, that is, the engine 1 is judged to be in the premixed combustion region (H), firstly, basic fuel injection amount QHb and Qcb and basic fuel injection timing ITHb and ITHc are respectively set for the premixed compressive ignition combustion. Especially, at step SA6, the basic injection amount QHb for the main-injection executed at a relatively early timing in the compression stroke of the cylinder 2 is read from the premixed combustion (H) in the injection amount map or table or relationship, and the basic injection amount Qcb for the auxiliary-injection executed at a late stage of the compression stroke of the cylinder 2 is read from the injection amount map or table or relationship. The injection amount table holds the optimum value empirically predetermined corresponding to a target EGR ratio EGRnf (preferably set within a range between approximately 50% and approximately 60%, described later in detail) determined based on the engine operational condition (the target torque Trq and the engine rotational speed ne) and is at least temporarily electronically stored in the memory of the ECU 40. In this table, as shown in FIG. 13 (a) by way of example, the basic injection amount Qcb is set equal to zero when the EGR ratio is the first predetermined value or more, and the Qcb is set so as to be gradually increased for the lower EGR ratio when the EGR ratio is lower than the first predetermined value. The value of the target EGR ratio EGRnf is determined with reference to the EGR map or table or relationship based on the engine operational condition, in the EGR control process described later.

Then, at step SA7, a basic injection timing ITHb for the main-injection (corresponding to a crank angle when the needle of the injector 5 opens) is read from the premixed combustion region (H) in the injection timing map or table or relationship, and an auxiliary-injection timing Itc is read from the memory of the ECU 40. As described above, the auxiliary-injection timing Itc is empirically prescribed such that its optimum value is within a range at the end of the compression stroke (for example, BTDC 20 to 10 degrees CA) after the premixture by fuel of the main-injection causes the cool flame reaction, and is electronically stored in the memory of the ECU 40.

Especially, in the injection amount map or table or relationship, the value of the basic injection amount QHb for the premixed combustion region (H) is set or determined so as to be increased for the larger accelerator pedal position Acc, and for the larger engine rotational speed ne. Additionally, in the injection amount map or table or relationship, the value of the basic injection timing ITHb for the premixed combustion region (H) is set so as to be advanced for the larger accelerator pedal position Acc, and for the larger engine rotational speed ne, and is set corresponding to the fuel injection amount and the fuel pressure within a predetermined crank angle range in the compression stroke of the cylinder 2 (for example, BTDC approximately 90 to approximately 30 degrees CA, preferably BTDC approximately 60 to approximately 30 degrees CA) so that most of the fuel spray combusts after well mixed with air.

Then, at step SA8, the actual EGR ratio of the engine 1 is estimated, and the estimated value (the actual EGR ratio EGR) is updated and stored in the memory of the ECU 40. For estimating the actual EGR ratio EGR, for example, any adequate calculation may be used that estimates the value according to the intake air amount determined based on the signals from the air-flow sensor 19, the oxygen concentration determined based on the signals from the linear O2 sensor 29, and fuel injection amount.
Next, at step SA9, an EGR deviation ΔEGR is determined by subtracting the actual EGR ratio EGR form the target EGR ratio EGRnf.

Then, at step SA10, a first corrective amount Qcfb for the fuel injection amount corresponding to the EGR deviation ΔEGR is set. Particularly, the memory of the ECU 40 at least temporarily electronically stores a correction map or table or relationship shown in FIG. 13 (b) by way of example, from which the first corrective amount Qcfb corresponding to the EGR deviation ΔEGR determined at step SA9 is read. The correction table holds the preferably empirically predetermined or predeterminable optimum value of the first corrective amount Qcfb corresponding to the EGR deviation ΔEGR. As shown, if the EGR deviation ΔEGR is a positive value, the first corrective amount Qcfb is a negative value, and if the EGR deviation ΔEGR is a negative value, the first corrective amount Qcfb is a positive value. In any cases, as the absolute value of the EGR deviation ΔEGR increases, the absolute value of the first corrective amount Qcfb increases in a substantially proportional manner. In addition, a dead zone is defined which provides the first corrective amount Qcfb of zero when the absolute value of the EGR difference ΔEGR is the predetermined value or less.

Next, at step SA11, a judgement is made as to whether the engine 1 is in a predetermined accelerating condition or not. For example, the accelerating condition is judged if the accelerator pedal position Acc is on increase and the change in the amount is larger than the predetermined value. If YES is judged, the sequence proceeds to step SA12 described later. If No is judged, that is, the engine is not in the accelerating condition, or the engine 1 is in the steady operational condition, the sequence proceeds to step SB1 of a control process shown in FIG. 11. At this step SB1, a rate of change in the rotational speed of the crank shaft 10, that is, a crankangular velocity changing rate is calculated according to the signals from the crank angle sensor 11.
Especially, for example, the crankangular velocity changing rate is determined by subtracting the last but one crankanglar velocity from the last crankangular velocity, which are stored in the memory of the ECU 40.

Then, at step SB2, a judgement is made as to whether the crankanglar velocity has lowered or not. Particularly, the judgement is made based on the sign and absolute value of crankangular velocity changing rate. If the sign of crankangular velocity changing rate is negative and its absolute value is greater than a predetermined judgement threshold, NO is judged, that is, the crankangular velocity is judged to have increased, then the sequence proceeds to step SB6 described later. On the other hand, if the sign of crankangular velocity changing rate is negative and its absolute value is greater than the predetermined judgement threshold, YES is judged, that is, the crankangular velocity is judged to have decreased, then the sequence proceeds to step SB3. If the absolute value of the crankangular velocity changing rate is judged to be the judgement threshold or less, the step SB2 makes the same judgment as that in the previous control cycle.

Next, at step SB3, a judgement is made as to whether the auxiliary-injection amount was increased in the previous control cycle. That is, for example, if the value determined by subtracting the last but one auxiliary-injection amount from the last auxiliary-injection amount, which are stored in the memory of the ECU 40, is greater than zero (YES is judged), the sequence proceeds to step SB4, where a second corrective amount Qcfr for the fuel injection amount corresponding to the engine torque fluctuation is set. Particularly, a new second corrective amount Qcfr is determined by subtracting a predetermined amount a from the second corrective amount Qcfr in the previous control cycle. On the other hand, if the auxiliary-injection amount in the last control cycle is smaller than that in the last but one control cycle (step SB2 judges NO), the sequence proceeds to step SB5. At step SB5, a new second corrective amount Qcfr is determined by adding a predetermined amount α to the second corrective amount Qcfr in the previous control cycle.

In short, when the decrease in crankangular velocity results from the increase in the auxiliary-injection amount, the auxiliary-injection amount is decreased for accommodating the decrease in the output torque of the engine 1. When the decrease in crankangular velocity results from the decrease in the auxiliary-injection amount, the auxiliary-injection amount is increased.

On the other hand, at step SB6 to which the sequence proceeds after judging NO, that is, after judging that the crankangular velocity has increased at step SB2, a judgement is made as to whether the auxiliary-injection amount was increased at the previous control cycle in the same manner as step SB3. If YES is judged, the sequence proceeds to step SB7 where a second corrective amount Qcfr is determined by adding a predetermined amount α to the second corrective amount Qcfr in the previous control cycle. If NO is judged, that is, the auxiliary-injection amount is decreased, the sequence proceeds to step SB8 where a new second corrective amount Qcfr is determined by subtracting a predetermined amount α from the second corrective amount Qcfr in the previous control cycle.

In short, when the increase in crankangular velocity, or the increase in output torque of the engine 1 results from the increase in the auxiliary-injection amount, the auxiliary-injection amount is further increased. Then, the increase in crankangular velocity results from the decrease in the auxiliary-injection amount, the auxiliary-injection amount is further decreased.

Then, at step SB9 after steps SB4, SB5, SB7, and SB8, the auxiliary-injection amount Qct is calculated by summing up the basic injection amount Qcb, the first corrective amount Qcfb, and the second corrective amount Qcfr. Next, at step SB10, the auxiliary-injection amount Qct calculated at step SB9 is corrected so as not to exceed a predetermined upper limit Qcg. Particularly, a map or table or relationship is prescribed which provides the upper limit Qcg corresponding to the target torque Trq and the engine rotational speed ne, and the upper limit Qcg read from the map or table or relationship is compared with the auxiliary-injection amount Qct. If Qct =< Qcg, the value of the Qct is maintained without correction, and if Qct > Qcg, the value of the Qcg is determined as Qct.

Next, at step SB11, a main-injection amount QHt is determined based on the basic injection amount QHb for the main-injection determined at step SA6 and the auxiliary-injection amount Qct corrected at step SB10. That is, because the combustion of fuel by the auxiliary-injection contributes to the output torque of the engine 1, the amount for the contribution is subtracted from the basic injection amount QHb to determine the final main-injection amount QHt. Then, at step SB12, the injector 5 is controlled to execute the main-injection of fuel at the fuel injection timing ITHt in the compression stroke of the cylinder 2, and then the injector 5 is controlled to execute the auxiliary-injection at the fuel injection timing ITc, in each of the cylinders 2 of the engine 1, subsequently, the sequence returns.

In short, while the engine 1 is in the stable condition, the auxiliary-injection amount is correctively increased or decreased compulsorily and often, and the change in output torque of the engine 1 is detected based on the change in crankangular velocity. In accordance with the detected result, the auxiliary-injection amount is controlled to provide the maximum amount of the output torque.

On the other hand, at step SA12 to which the sequence proceeds after judging YES, that is, after judging the engine 1 is in the accelerating condition at step SA11 in FIG. 10 described above, the second corrective amount Qcfr is set zero, then the sequence proceeds to steps SB9 through SB12 in FIG. 11 described above where the injector 5 is controlled to execute the main-injection and the auxiliary-injection in each of the cylinders 2 of the engine 1, subsequently, the sequence returns. That is, the correction of the auxiliary-injection amount based on the change in crankangular velocity is not performed during the accelerating condition of the engine 1.

In the control process shown in FIG. 10 and 11 described above, steps SA6, SA7, SB11, and SB12 constitute or are part of or executed in the main-injection controller 40a (main-injection control means) which controls the injector 5 to execute the main-injection within the predetermined crank angle range in the compression stroke of the cylinder 2 to provide the premixed compressive ignition combustion, while the engine 1 is in the premixed compressive ignition combustion region (H) defined on the low engine load side (in the predetermined operational condition).

In the control process, steps SA6, SA7, SA9, SA10, SB2 through SB10, and SB12 constitute or are part of or executed in the auxiliary-injection controller 40b (the auxiliary-injection control means) which controls the injector 5 to execute the auxiliary-injection fuel at the predetermined timing at a late stage of the compression stroke so as to delay the shift from the cool flame reaction to the hot flame reaction, just before or after the fuel by the main-injection starts the cool flame reaction caused by the temperature increase in the combustion chamber e.g. within the compression stroke in the cylinder 2.

Additionally, in the control process in FIG. 10 described above, step SA8 constitutes or is part of or executed in the EGR estimator 40c (the EGR ratio estimating means) for estimating the actual EGR ratio of the engine 1. Moreover, in the control process in FIG. 11, step SB1 constitutes the crankanglar velocity fluctuation detector 40d (the engine torque detecting means) for detecting the crankangular velocity changing rate of the engine 1 as a value associated with the output torque. Furthermore, the auxiliary-injection control means 40b adjusts the auxiliary-injection amount so that the premixture ignites within the predetermined range near TDC, according to the detected results of the EGR estimator 40c and the crankangular velocity fluctuation rate detector 40d.

According to the control process in the preferred flow chart or process as above, the auxiliary-injection controller 40b increases the auxiliary-injection amount when the actual EGR ratio EGR is smaller than the first predetermined value. However, the present invention is not limited to this. For example, the auxiliary-injection controller 40b may increase the auxiliary-injection amount when the actual EGR ratio EGR is smaller than another value being smaller than the first predetermined value (the second predetermined value).

### (Control Process of EGR control)

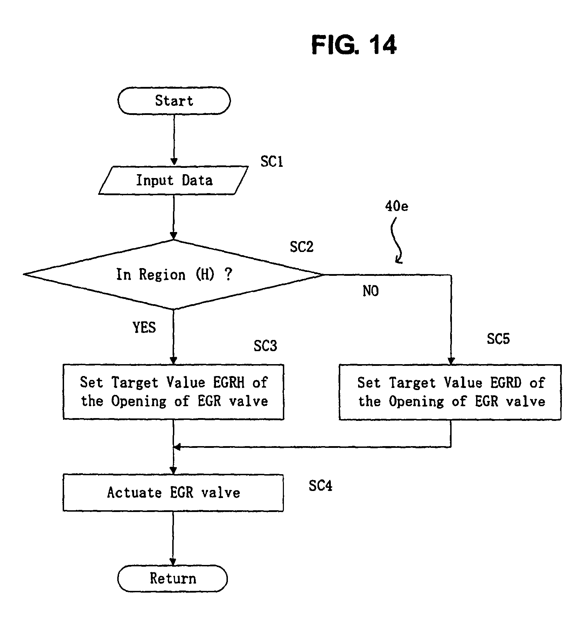

Next, a preferred control process of EGR by the ECU 40 will now be described in detail with reference to the flowchart illustrated in FIG. 14. At step SC1 just after the start, at least an output signal from the fuel pressure sensor 7, an output signal from the crank angle sensor 11, an output signal from the intake air pressure sensor 18, an output signal from the air flow sensor 19, an output signal from the accelerator pedal position sensor 39, and/or the other signals are entered (data input). In addition, values of a variety of flags at least temporarily stored in the memory of the ECU 40 are entered. Then, at step SC2, in the same manner as step SA3 in the control process of the fuel injection shown in FIG. 10, the combustion mode of the engine 1 is judged. If NO is judged, that is, the mode is in the diffusion combustion region (D), the sequence proceeds to step SC5. If YES is judged, that is, the mode is in the premixed combustion region (H), the sequence proceeds to SC3, where a target value EGRH of the opening of the EGR valve 35 corresponding to the engine operational condition is determined with reference to an EGR map or table or relationship electronically stored in the memory of the ECU 40. Next, at step SC4, the ECU transmits a control signal to the solenoid valve 36 of the diaphragm of the EGR valve 35 (for the actuation of the EGR valve 35), and the sequence returns.

On the other hand, at step SC5 to which the sequence proceeds after judging NO, that is, after judging that the engine 1 is in the diffusion combustion region (D) at step SC2, the target opening value EGRD of the EGR valve 35 corresponding to the diffusion combustion condition of the engine 1 is read from the EGR map or table or relationship. Next, the sequence proceeds to step SC4 where the EGR valve 35 is actuated, and then returns.

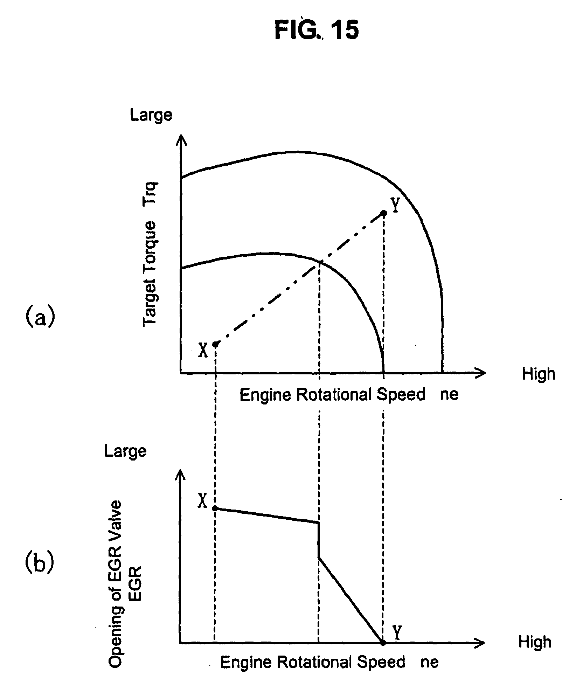

The EGR map or table or relationship holds the optimum opening value of the EGR valve 35 corresponding to the target torque Trq and the engine rotational speed ne preferably empirically predetermined. Particularly, the map or table or relationship provides the target EGR ratio EGRnf based on the engine operational condition, such that the target EGR ratio is set to approximately 50% to 60% (Preferably, approximately 53 to 60%) in the premixed combustion region (H), and approximately 40% or less in the diffusion combustion region (D). As shown in FIG. 15 (a) by way of example, the target opening values of the EGR valve 35 EGRH and EGRD are decreased for the larger accelerator pedal position Acc and for the larger engine rotational speed ne, in the premixed combustion region (H) and the diffusion combustion region (D) respectively.

Particularly, each of the target values EGRH and EGRD are respectively set so that the opening of the EGR valve 35 changes as indicated in FIG. 15 (b), as the operational condition shifts from a predetermined or predeterminable operational condition defined on the low engine rotational speed ne and low engine load side (as indicated by the point X in the drawing) to a predetermined or predeterminable operational condition defined on the high engine rotational speed ne and high engine load side (as indicated by the point Y in the drawing). Thus, when the engine operational condition changes along the line X-Y, the opening of the EGR valve 35 is gradually decreased towards the higher engine rotational speed ne and higher engine load side in the premixed combustion region (H), discontinuously decreased at the boundary between the premixed combustion region (H) and the diffusion combustion region (D), and gradually decreased again towards the higher engine rotational speed ne and higher engine load side. As shown, the change in the opening of the EGR valve 35 with respect to the engine operational condition is prescribed so as to be significantly small in the premixed combustion region (H), in contrast, relatively large in the diffusion combustion region (D).

Thus, while the engine 1 is in the premixed combustion region (H), the opening of the EGR valve 35 is relatively widened to recirculate a large amount of the exhaust gas to the intake passage 16 so as to set the EGR ratio EGR to the target value (the target EGR ratio EGRnf) being equal to or larger than the first predetermined or predeterminable value, thereby achieving the favorable premixed compressive ignition combustion. On the other hand, while the engine 1 is in the diffusion combustion region (D), the engine 1 is caused to perform the conventional diesel combustion during which the opening of the EGR valve 35 is relatively narrowed so as to set the EGR ratio EGR to an adequately small value, thereby suppressing NOx production without increase in soot production.

The control process shown in FIG. 14, as a whole, constitutes the EGR controller 40e (the exhaust gas recirculation control means) which adjusts the opening of the EGR valve 35 so that the EGR ratio is the first predetermined value or more when the engine 1 is in the premixed combustion region (H), and the EGR ratio is smaller than the first predetermined value when the engine 1 is in the diffusion combustion region (D).

### (Action and Effect)

The action and effect of the combustion control apparatus for the diesel engine 1 according to this preferred embodiment will now be described. While the engine 1 is in the premixed combustion region (H), the opening of the EGR valve is relatively widened so that exhaust gas is recirculated from the exhaust passage 26 upstream of the turbine 27 to the intake passage 16 through the EGR passage 34. Next, a considerable amount of recirculated exhaust gas is supplied to the combustion chamber 4 of the cylinder 2 together with fresh air from the outside. Then, the injector 5 projecting into the combustion chamber 4 in the cylinder 2 executes the main-injection at the predetermined timing in the compression stroke of the cylinder 2. This fuel injected during the main-injection is relatively widely diffused over the combustion chamber 4 and sufficiently mixed with intake air (fresh air and the recirculated exhaust gas) so as to form highly homogenized mixture.
This mixture is caused to start oxidation reaction at relatively low temperature (so called cool flame reaction) by the temperature rise in the combustion chamber 4 during he compression stroke of the cylinder.

At this time, the cool flame reaction of mixture starts particularly with the portion with high density of the fuel vapor and high density of oxygen. However, this mixture contains a large amount of exhaust gas (carbon dioxide and other gas) being larger in heat capacity than air (nitrogen, oxygen, and other gas), and the density of the fuel and oxygen is small as a whole because of the large content of the exhaust gas. Furthermore, the reaction heat of the cool flame reaction is absorbed in carbon dioxide being large in heat capacity. Therefore, locally rapid reaction is prevented and the shift to the oxidation reaction at high temperature (so called hot flame reaction) is thus avoided . Subsequently, the injector 5 executes the auxiliary-injection to inject fuel at the predetermined timing at a late stage of the compression stroke into the mixture which has started cool flame reaction as described above. This fuel, during its vaporization, absorbs heat from the surrounding mixture, which lowers the temperature of the mixture, thereby further delaying the shift to the hot flame reaction, that is, ignition.

Next, the mixture simultaneously ignites and combusts, when the TDC is approached in the cylinder 2, gas temperature in the combustion chamber 4 further rises, and the density of the fuel and oxygen sufficiently increases. The ignition timing depends mainly on the ratio of the amount of recirculated exhaust gas in the intake air (the EGR ratio), the recirculated exhaust gas temperature, and the auxiliary-injection fuel amount. Even if the EGR ratio is lower than an initial target value, or even if the recirculated exhaust gas temperature is particularly high, the ratio and temperature are taken into account in the adjustment of the auxiliary-injection amount, thereby maintaining the ignition timing of the mixture within the range near TDC. That is, even when, for example, the acceleration of the engine 1 temporally decreases the recirculation ratio of the exhaust gas to the combustion chamber 4, or even when the long time driving extremely raise the exhaust gas temperature, the auxiliary-injection amount is controlled to optimize the ignition timing of mixture. Thus, the heat generation characteristic with high cycle efficiency is constantly attained, thereby improving fuel efficiency.

Additionally, in the mixture which ignites and combusts in the abovementioned manner, fuel vapor, air, and recirculated exhaust gas have been already homogeneously distributed sufficiently and the cool flame reaction is in progress at the portion being high in fuel density as described above, with little portion being unduly high in fuel density. Thus, no or little soot is produced.
Moreover, as described above, the fuel vapor is homogeneously distributed in the mixture and a considerable amount of carbon dioxide and other gas are homogeneously diffused, which prevents the locally abrupt heat generation in the mixture even when the mixture simultaneously ignites and combusts. Furthermore, because the surrounding carbon dioxide and the other gas absorbs the combustion heat, the rise in combustion temperature is suppressed, thereby greatly suppressing NOx generation.

On the other hand, while the engine 1 is in the diffusion combustion region (D), the injector 5 injects fuel into the combustion chamber 4 at least near TDC to cause the diffusion combustion after the initial premixed combustion. (the conventional diesel combustion)
At this time, the opening of the EGR valve 35 is relatively narrowed, so that the proper amount of the reciruclated exhaust gas suppresses the generation of NOx and soot. Additionally, the recirculation ratio of the exhaust gas is set to the predetermined value or less, which ensure the supply of fresh air, thereby achieving the sufficient engine output.

### (Another embodiment of the present invention)

It should be appreciated that the invention is not limited to the preferred embodiment as described above. Particularly, for example, in the forgoing embodiment, the auxiliary-injection amount is adjusted based on both the actual EGR ratio EGR and the crankangular velocity changing rate. However, for example, the amount may be adjusted based on one of them, only. Besides the above, the auxiliary-injection amount may be adjusted in view of one or more of the other factors influencing on the ignition delay time, such as the engine coolant temperature, intake air temperature, and/or charging pressure.

Though in the forgoing embodiment, the injector 5 starts injecting fuel within the predetermined crank angle range in the compression stroke of the cylinder 2 while the engine 1 is performing the premixed compressive ignition combustion, the present invention is not limited to this. For example, the fuel injection may start in the intake stroke of the cylinder 2.

Additionally, though the foregoing embodiment incorporates the present invention into the combustion control apparatus A for a direct-injection diesel engine with a common-rail, the present invention is not limited to this. For example, the present invention may apply to a gasoline engine which causes the premixture with gasoline to self-ignite without the use of any spark plug in the predetermined operational condition.

As described above, according to the combustion control apparatus in accordance with the preferred embodiment of the present invention, in a direct-injection diesel engine 1 in which fuel injected during the main-injection into the combustion chamber 4 is well mixed with intake air during the ignition delay time of the mixture provided by a large amount of exhaust gas recirculation, to attain a combustion condition with relatively large ratio of the premixed combustion, the transition from the cool flame reaction to the hot flame reaction caused in the compression stroke of the cylinder 2 by the premixture formed of the fuel by the main-injection can be delayed by fuel of the auxiliary-injection. Further, even when the recirculation ratio of the exhaust gas is widely changed or even when the exhaust gas temperature is fluctuated by the change in operational condition of the engine 1, the ignition timing of the premixture is optimized by the adjustment of the auxiliary-injection amount, so that the heat generation characteristic with high cycle efficiency is attained, thereby improving fuel efficiency.

## Claims

1. A combustion control apparatus (A) for an engine (1) having an injector (5) projecting into a combustion chamber (4) of a cylinder (2) of the engine (1) and an exhaust gas recirculation regulator means (35, 36) for adjusting the amount of the exhaust gas recirculated to the combustion chamber (4), the combustion control apparatus (A) comprising:
a main-injection control means (40a) which controls the injector (5) to inject fuel at a timing in the intake stroke or the compression stroke to achieve a combustion in which the ratio of the premixed combustion is larger than that of the diffusion combustion when the engine (1) is in a predetermined operational condition;
an exhaust gas recirculation control means (40e) which controls said exhaust gas recirculation regulator means (35, 36) so that an EGR value associated with the recirculation amount of the exhaust gas is a first predetermined value or more when the engine (1) is in the predetermined operational condition ; and
an auxiliary-injection control means (40b) which controls the amount of auxiliary injection for auxiliary injecting the fuel by means of the injector (5) at a predetermined timing at a late stage of the compression stroke,
**characterized in that**
the auxiliary-injection control means (40b) controls the amount (Qct) of the auxiliary injection at least in correspondence with the EGR value.

2. A combustion control apparatus (A) for an engine (1) as claimed in claim 1, further comprising,
an EGR ratio estimating means (40c) for estimating an actual EGR value (EGR) of the engine (1), wherein,
said auxiliary-injection control means (40b) adjusts the auxiliary-injection amount (Qct) according to at least the value (EGR) estimated by said EGR ratio estimating means (40c).

3. A combustion control apparatus (A) for an engine (1) as claimed in claim 2, wherein,
said auxiliary-injection control means (40b) increases the auxiliary-injection amount (Qct) when the estimated value (EGR) of the EGR value is equal to or larger than a second predetermined value smaller than the first predetermined value.

4. A combustion control method for an engine (1), including an injector (5) projecting into a combustion chamber (4) of a cylinder (2) of the engine (1) and an exhaust gas recirculation regulator means (35, 36) for adjusting the amount of the exhaust gas recirculated to the combustion chamber (4); comprising the following steps of:
controlling (SA6, SA7, SB11, SB12) the injector (5) to inject fuel at a timing in the intake stroke or the compression stroke to achieve a combustion in which the ratio of the premixed combustion is larger than that of the diffusion when the engine (1) is in a predetermined operational condition;
controlling (SC1-SC5) the exhaust gas recirculation regulator means (35, 36) so that an EGR value associated with the recirculation amount of the exhaust gas is a first predetermined value or more when the engine (1) is in the predetermined operational condition; and
controlling (SA6, SA7, SA9, SA10, SB2-SB10, SB12) the amount of auxiliary injection for auxiliary injecting the fuel by the injector (5) at a predetermined timing at a late stage of the compression stroke;
**characterized by**
controlling the amount (Qct) of the auxiliary injection at least in correspondence with the EGR value.

5. Computer-readable storage medium having stored thereon a computer program, which, when loaded onto a computer, carries out a combustion control method as defined in claim 4.

6. Computer program, which, when loaded onto a computer, carries out a combustion control method as defined in claim 4.

## Patentansprüche

1. Verbrennungssteuerapparat (A) für einen Motor (1), welcher eine Einspritzeinrichtung (5), welche in eine Verbrennungskammer (4) eines Zylinders (2) des Motors (1) vorragt, und Abgasrezirkulations-Regulatormittel (35, 36) für ein Einstellen der Menge des Abgases aufweist, welches zu der Verbrennungskammer (4) rezirkuliert ist bzw. wird, wobei der Verbrennungsregel- bzw. -steuerapparat (A) umfaßt:
Haupteinspritzungs-Regel- bzw. -Steuermittel (40a), welche die Einspritzeinrichtung (5) regeln bzw. steuern, um Kraftstoff zu einem Zeitpunkt in dem Einlaßhub oder in dem Kompressionshub einzuspritzen, um eine Verbrennung zu erzielen, in welcher das Verhältnis der vorgemischten Verbrennung größer als dasjenige der Diffusionsverbrennung ist, wenn sich der Motor (1) in einem vorbestimmten Betriebszustand befindet;
Abgasrezirkulations-Regel- bzw. -Steuermittel (40e), welche die Abgasrezirkulations-Regulatormittel (35, 36) regeln bzw. steuern, so daß ein EGR-Wert, welcher mit der Rezirkulationsmenge des Abgases assoziiert ist, ein erster vorbestimmter Wert oder mehr ist, wenn sich der Motor (1) in dem vorbestimmten Betriebszustand befindet; und
Hilfseinspritzungs-Regel- bzw. -Steuermittel (40b), welche die Menge einer hilfsweisen bzw. Hilfseinspritzung für ein hilfsweises Einspritzen des Kraftstoffs mittels der Einspritzeinrichtung (5) an einem vorbestimmten Zeitpunkt bzw. Zeitgebung an einer später bzw. späteren Stufe des Kompressionshubs regeln bzw. steuern,
**dadurch gekennzeichnet, daß**
die Hilfseinspritzungs-Regel- bzw. -Steuermittel (40b) die Menge (Qct) der Hilfseinspritzung wenigstens in Übereinstimmung mit dem EGR-Wert regeln bzw. steuern.

2. Verbrennungssteuerapparat (A) für einen Motor (1) nach Anspruch 1, weiterhin umfassend
EGR-Verhältnis-Abschätzungsmittel (40c) für ein Abschätzen eines aktuellen bzw. tatsächlichen EGR-Werts (EGR) des Motors (1), wobei
die Hilfseinspritzungs-Regel- bzw. -Steuermittel (40b) die Hilfseinspritzmenge (Qct) gemäß wenigstens dem Wert (EGR) einstellen, welcher durch die EGR-Verhältnis-Abschätzmittel (40c) abgeschätzt ist.

3. Verbrennungssteuerapparat (A) für einen Motor (1) nach Anspruch 2, wobei
die Hilfseinspritzungs-Regel- bzw. -Steuermittel (40b) die Hilfseinspritzmenge (Qct) erhöhen, wenn der abgeschätzte Wert (EGR) des EGR-Werts gleich wie oder größer als ein zweiter vorbestimmter Wert kleiner als der erste vorbestimmte Wert ist.

4. Verbrennungssteuerverfahren für einen Motor (1), enthaltend eine Einspritzeinrichtung (5), welche in eine Verbrennungskammer (4) eines Zylinders (2) des Motors (1) vorragt, und Abgasrezirkulations-Regulatormittel (35, 36) für ein Einstellen der Menge des Abgases, welches zu der Verbrennungskammer (4) rezirkuliert wird; umfassend die folgenden Schritte:
Regeln bzw. Steuern (SA6, SA7, SB11, SB12) der Einspritzeinrichtung (5), um Kraftstoff zu einem Zeitpunkt bzw. einer Zeitgebung in dem Einlaßhub oder dem Kompressionshub einzuspritzen, um eine Verbrennung zu erzielen, in welcher das Verhältnis der vorgemischten Verbrennung größer als dasjenige der Diffusion ist, wenn sich der Motor (1) in einem vorbestimmten Betriebszustand befindet;
Regeln bzw. Steuern (SC1-SC5) der Abgasrezirkulations-Regulatormittel (35, 36), so daß ein EGR-Wert, welcher mit der Rezirkulationsmenge des Abgases assoziiert ist bzw. wird, ein erster vorbestimmter Wert oder mehr ist, wenn sich der Motor (1) in dem vorbestimmten Betriebszustand befindet; und
Regeln bzw. Steuern (SA6, SA7, SA9, SA10, SB2-SB10, SB12) der Menge einer hilfsweisen bzw. Hilfseinspritzung für ein hilfsweises Einspritzen des Kraftstoffs durch die Einspritzeinrichtung (5) zu einem vorbestimmten Zeitpunkt bzw. Zeitgebung an einer späten Stufe des Kompressionshubs;
**gekennzeichnet durch**
ein Regeln bzw. Steuern der Menge (Qct) der Hilfseinspritzung wenigstens in Übereinstimmung mit dem EGR-Wert.

5. Computerlesbares Speichermedium, welches darauf ein Computerprogramm gespeichert aufweist, welches, wenn auf einen Computer geladen, ein Verbrennungssteuerverfahren ausführt, wie es in Anspruch 4 definiert ist.

6. Computerprogramm, welches, wenn es auf einen Computer geladen ist, ein Verbrennungssteuerverfahren ausführt, wie es in Anspruch 4 definiert ist.

## Revendications

1. Appareil (A) de contrôle de combustion pour un moteur (1) dont un injecteur (5) pénètre dans une chambre de combustion (4) d'un cylindre (2) du moteur (1) et un moyen (35, 36) de régulation du recyclage de gaz d'échappement ajuste le débit de gaz d'échappement recyclé vers la chambre de combustion (4), l'appareil (A) de contrôle de combustion comprenant :
un moyen (40a) de commande de l'injection principale qui commande l'injecteur (5) pour qu'il injecte du carburant de manière synchronisée pendant la course d'admission ou la course de compression de manière à obtenir une combustion dans laquelle le taux de combustion du prémélange est plus grand que celui de la combustion par diffusion lorsque le moteur (1) se trouve dans les conditions de fonctionnement prédéterminées,
un moyen (40e) de contrôle du recyclage des gaz d'échappement qui contrôle ledit moyen (35, 36) de régulation de la circulation des gaz d'échappement de telle sorte qu'un indice EGR ("exhaust gas recycling"-recyclage des gaz d'échappement) associé au taux de recirculation des gaz d'échappement ait une première valeur prédéterminée ou une valeur supérieure à celle-ci lorsque le moteur (1) se trouve dans les conditions de fonctionnement prédéterminées et
un moyen (40b) de contrôle de l'injection auxiliaire qui contrôle le niveau d'injection auxiliaire de carburant au moyen de l'injecteur (5) à un moment prédéterminé situé plus tard pendant la course de compression,
**caractérisé en ce que**
le moyen (40b) de contrôle de l'injection auxiliaire contrôle le niveau (Qct) d'injection auxiliaire au moins en correspondance à l'indice EGR.

2. Appareil (A) de contrôle de combustion pour un moteur (1) selon la revendication 1, qui comprend en outre :
un moyen (40c) d'estimation du taux EGR qui estime la valeur (EGR) effective de l'EGR du moteur (1),
ledit moyen (40b) de contrôle de l'injection auxiliaire ajustant le niveau d'injection auxiliaire (Qct) au moins en fonction de la valeur (EGR) estimée par ledit moyen (40c) d'estimation du taux de l'EGR.

3. Appareil (A) de contrôle de la combustion pour un moteur (1) selon la revendication 2, dans lequel ledit moyen (40b) de contrôle de l'injection auxiliaire augmente le niveau d'injection auxiliaire (Qct) lorsque la valeur estimée (EGR) de l'indice d'EGR est égale ou supérieure à une deuxième valeur prédéterminée inférieure à la première valeur prédéterminée.

4. Procédé de contrôle de la combustion d'un moteur (1) qui comporte un injecteur (5) qui pénètre dans la chambre de combustion (4) d'un cylindre (2) du moteur (1) et un moyen (35, 36) de régulation de la recirculation des gaz d'échappement qui ajuste le niveau de recirculation des gaz d'échappement vers la chambre de combustion (4), lequel procédé comprend les étapes qui consistent à :
commander (SA6, SA7, SB11, SB12) à un injecteur (5) d'injecter du carburant à un instant de la course d'admission ou de la course de compression qui permet d'obtenir une combustion dans laquelle le taux de combustion du prémélange est supérieur à celui de la combustion par diffusion lorsque le moteur (1) se trouve dans des conditions de fonctionnement prédéterminées,
commander (SC1-SC5) le moyen (35, 36) de régulation du recyclage des gaz d'échappement de telle sorte qu'une valeur EGR associée au niveau de recirculation des gaz d'échappement soit une première valeur prédéterminée ou une valeur supérieure à celle-ci lorsque le moteur (1) se trouve dans les conditions de fonctionnement prédéterminées et
contrôler (SA6, SA7, SA9, SA10, SB2-SB10, SB12) le niveau de l'injection auxiliaire du carburant par l'injecteur (5) à un instant prédéterminé situé plus tard dans la course de compression,
**caractérisé par** l'étape qui consiste à
contrôler le niveau (Qct) de l'injection auxiliaire au moins en correspondance avec la valeur EGR.

5. Support de mémoire lisible par ordinateur et sur lequel est conservé un programme informatique qui, lorsqu'il est chargé dans un ordinateur, exécute le procédé de contrôle de combustion défini dans la revendication 4.

6. Programme informatique qui, lorsqu'il est chargé dans un ordinateur, exécute le procédé de contrôle de la combustion défini dans la revendication 4.
